# EUROPÄISCHE PATENTANMELDUNG

(11) **EP 4 006 258 A1**
(43) Veröffentlichungstag der Anmeldung: **01.06.2022**
(21) Anmeldenummer: 21210620.7
(22) Anmeldetag: 25.11.2021
(51) Int. Cl.: E04F 13/074, F24D 17/00, F24D 3/14, F24D 3/16

(54) **FASSADENSYSTEM**

(30) Priorität: 25.11.2020 DE 102020131269
(71) Anmelder: KTS GmbH, 87700 Memmingen (DE)
(72) Erfinder: BÜHLER, Armin, 87733 Markt Rettenbach (DE); HOPPE, Christian, 99092 Erfurt (DE)
(74) Vertreter: Patentanwälte Olbricht, Buchhold, Keulertz Partnerschaft mbB

(57) **Zusammenfassung**

Ein Fassadensystem, bestehend aus einer Gebäudeaußenwand mit einer Außenseite und einer Innenseite sowie einem Rohrleitungsregister, wobei das Rohrleitungsregister dafür vorgesehen ist, ein hydraulisches, wärmetransportierenden Medium aufzunehmen und zu leiten und das Rohrleitungsregister auf oder in der Außenseite der Gebäudeaußenwand angeordnet ist.

## Beschreibung

Die Erfindung betrifft ein Fassadensystem, wie es insbesondere an Gebäuden eingesetzt wird.

Der Energiebedarf von Räumen, wie zum Beispiel Wohnräumen, Büros und ähnlichen wird im Wesentlichen von der Beheizung der Räume bestimmt. Dabei wird die Wärme über Wärmetauscher, wie zum Beispiel Heizkörper, in den Raum übertragen und geht da zum Beispiel durch Konvektion oder Zugluft (zum Beispiel durch geöffnete Fenster) oder durch Wärmeleitung durch die Gebäudewand in die Umwelt verloren.

Die Wärmeleitung ist proportional abhängig vom Wärmedurchgangskoeffizienten und indirekt proportional von der Dicke des den Raum umgebenden Materials. Daher wird die Gebäudewand mit dickauftragenden, eine geringe Wärmeleitfähigkeit aufweisenden Materialien gedämmt. Dies führt zu erheblichen Dämmkosten und kostet Bauraum.

Es ist daher Aufgabe der Erfindung einen Vorschlag vorzulegen, der eine Alternative zum Dämmen einer Gebäudeaußenwand darstellt.

Gelöst wird diese Aufgabe durch ein Fassadensystem, bestehend aus einer Gebäudeaußenwand mit einer Außenseite und einer Innenseite sowie einem Rohrleitungsregister, wobei das Rohrleitungsregister dafür vorgesehen ist, ein hydraulisches, wärmetransportierendes Medium aufzunehmen und zu leiten und das Rohrleitungsregister auf oder in der Außenseite der Gebäudeaußenwand angeordnet ist und wobei das Rohrleitungsregister dafür vorgesehen ist, die Außenseite der Gebäudeaußenwand zu temperieren, bzw. zu erwärmen.

Als Gebäudeaußenwand wird im Rahmen dieser Anmeldung der Bereich verstanden, der konstruktionsbedingt die Last des Gebäudes trägt und für die Statik des Gebäudes sorgt. Gemäß der Erfindung ist vorgesehen, dass das Rohrleitungsregister auf der Außenseite der Gebäudeaußenwand angeordnet ist. Bei dieser alternativen Ausgestaltung der Erfindung wird das Rohrleitungsregister zum Beispiel auf die Ziegel- oder Betonwand montiert. Die Ziegel- oder Betonwand ist dabei die statisch wirksame Komponente. Die Erfindung ist gleichwohl aber auch in einer Holzwand realisierbar. Zum Beispiel ist eine Holzwand in Holzständerbauweise ausgeführt und in diesem Ausführungsbeispiel ist es möglich das Rohrleitungsregister in die Fächer zwischen den Ständern einzubauen. Somit ist das Rohrleitungsregister in die lasttragende Ebene integriert.

Als wärmetransportierendes hydraulisches Medium ist normalerweise Wasser vorgesehen, ohne aber die Erfindung hierauf beschränken zu wollen. Es kann auch eine Mischung von Flüssigkeiten (zum Beispiel Wasser mit einem Frostschutzmittel) vorgesehen sein, um den Gefrierpunkt abzusenken, wenngleich dies eher die Ausnahme ist, von der Erfindung aber nicht ausgeschlossen ist.

Der Pfiff der Erfindung liegt darin, das erkannt worden ist, dass man mit einer Erwärmung der Fassadenaußenseite bzw. Außenseite einer Gebäudeaußenwand den Wärmeverlust durch Wärmeleitung durch die Wand ebenfalls reduziert.

Die Wärmeleitung durch eine Wand wird auch von der Temperaturdifferenz zwischen der Gebäudeinnenseite (dem Raum) und der Außenseite bestimmt. Wird zur Temperierung der Außenseite der Gebäudeaußenwand zum Beispiel Grundwasser verwendet, so liegt hier ein Temperaturniveau von 8-10 °C vor. In einer kalten Nacht mit -5 °C kühlt sich der Raum, der auf 21 °C temperiert ist, nicht gegen eine Außenwand mit -5 °C ab, sondern nur gegen das Temperaturniveau von 8-10 °C. Dadurch wird die die Wärmeleitung durch die Wand mitbestimmende Temperaturdifferenz von 26 K auf 13 K halbiert.

Vorteilhafterweise ist daher das Fassadensystem dafür vorgesehen, die Außenseite der Gebäu- deaußenwand zu temperieren. Insbesondere ist vorgesehen, dass der 0°C Bereich in der Fassade bzw. dem Fassadensystem verläuft. Günstiger Weise ist dabei vorgesehen, dass sich der 0°C Bereich vor der Gebäudeaußenwand, welcher Teil des Fassadensystems ist, befindet.

In einer bevorzugten Ausgestaltung ist vorgesehen, dass eine Wärmequelle vorgesehen ist, die mit einer Zu- und einer Ableitung mit dem Rohrleitungsregister hydraulisch verbunden ist.

Die hier vorgeschlagene Wärmequelle zeichnet sich dadurch aus, dass sie eine thermische Energie von geringeren Temperaturniveau in großer Menge vorhält. Das typische Temperaturniveau der Wärmequelle liegt im Bereich von 3 °C bis 20 oder 25 °C. Das Temperaturniveau wird in einem Intervall definiert, das durch einen Mindestwert und einen Maximalwert begrenzt ist. Als Mindestwert werden zum Beispiel folgende Temperaturen vorgeschlagen: 3 °C, 5 °C, 7 °C, 9 °C, 11 °C, 13 °C, 15 °C, 17 °C. Als Maximalwert werden zum Beispiel folgende Temperaturen vorgeschlagen: 9 °C, 11 °C, 13 °C, 15 °C, 17 °C, 19 °C, 21 °C, 23 °C, 25 °C, 30 °C, 35 °C. Die hier beschriebene Offenbarung umfasst alle möglichen Kombinationen der angegebenen Mindestwerten mit den Maximalwerten, wobei der Mindestwert kleiner ist wie der Maximalwert. Typischerweise ist das Temperaturniveau der Wärmequelle geringer wie die Gebäude- bzw. Raumtemperatur und höher wie die Umgebungstemperatur, ohne aber den Anwendungsfall auf typische Wohntemperaturniveaus beschränken zu wollen. Die Erfindung eignet sich auch dafür, den Wärmeverlust in Gebäuden oder Räumen, die ein deutlich höheres Temperaturniveau vorhalten müssen (zum Beispiel Trocknungsräume usw.) zu reduzieren.

Die von der Wärmequelle vorgehaltene Energiemenge ist so groß, dass sich ihr Temperaturniveau auch bei einer über mehrere Tage, Wochen oder Monate (zum Beispiel im Winter, in unterschiedlichen Breiten, zum Beispiel während einer entsprechenden Kälte-oder Frostperiode) erstreckende Dauer der Temperierung bzw. Erwärmung der Außenseite der Gebäudeaußenwand nicht oder nur unwesentlich verändert/verringert.

Typischerweise ist die von der Wärmequelle vorgehaltene Wärmemenge erheblich viel größer (zum Beispiel mindestens 5 mal, 50 mal, 500 mal oder 5000 mal größer) wie die Wärmemenge, die zumindest von der Außenseite der Gebäudeaußenwand (bei dem Temperaturniveau der Wärmequelle) aufgenommen wird.

Die Wärmequelle wird zum Beispiel direkt, oder über einen Wärmetauscher mit der Zu- bzw. Ableitung verbunden, die dann mit dem (ersten) Rohrleitungsregister hydraulisch verbunden ist.

In einer bevorzugten Ausgestaltung ist vorgesehen, dass als Wärmequelle Grundwasser, Abwärme aus einem industriellen Prozess oder von im Gebäude installierten Anlagen, Geräte oder Maschinen oder solarthermische Wärme vorgesehen ist.

Erfindungsgemäß werden vorzugsweise Wärmequellen eingesetzt, die möglichst kostengünstig, idealerweise kostenlos zur Verfügung stehen. Hierzu zählt zum Beispiel Grundwasser, oder auch Abwärme aus einem industriellen Prozess oder von im Gebäude (dessen Wärmeverluste erfindungsgemäß reduziert werden sollen) installierten Anlagen, Geräte oder Maschinen, wie zum Beispiel Kühlaggregate, Klimageräte, Adsorptionskältemaschine, Abwärme von Computer oder Rechenzentren, Blockheizkraftwerke, usw.

Ein wesentlicher Vorzug des erfindungsgemäßen Vorschlages (dem System, der Verwendung, wie auch dem Verfahren) liegt insbesondere darin, dass Wärme auf geringerem Temperaturniveau hier weiter genutzt werden kann. Insbesondere kann Wärmemenge auf einem Temperaturniveau weiter sinnvoll genutzt werden, dessen Temperaturniveau oder Menge z.B. für den Einsatz / Betrieb einer Wärmepumpe unrentabel wäre!

Als Wärmequelle ist hierbei insbesondere auch die solarthermische Wärme zu zählen, die zum Beispiel an einem wolkigen Herbst- oder Wintertag anfällt. Somit kann auch die bei diesen Parametern anfallende solarthermische Energie effektiv genutzt werden.

Überraschenderweise leistet das erfindungsgemäße Fassadensystem nicht nur einen Beitrag zur Reduktion der Dämmkosten, sondern kann auch in einer alternativen Betriebsweise dafür eingesetzt werden, dass mit dem Rohrleitungsregister solare Wärmeenergie gesammelt und vorzugsweise in einen Wärmespeicher abtransportiert und dort gespeichert wird.

So wird mit dem erfindungsgemäßen Vorschlag tagsüber Solarenergie als Wärmeenergie eingesammelt und in einen Wärmespeicher gepuffert. Diese so gespeicherte Wärmeenergie kann dann im Bedarfsfalle, zum Beispiel abends, zur Temperierung des Raumes eingesetzt werden. Für diese Beheizung des Raumes fallen keine Kosten für Brennstoff an. Abends und nachts wird durch eine geänderte Betriebsweise des Fassadensystems der Wärmeverlust, durch die Wand, durch eine Temperierung der Außenseite der Gebäudeaußenwand reduziert.

Der erfindungsgemäße Vorschlag zur Speicherung von solare Wärmeenergie mit dem Fassadensystem nützt geschickter Weise die von der Sonne sowieso beschienenen Gebäudeflächen solarthermisch aus, die oftmals nicht ideal zur Sonne ausgerichtet sind. Die Dachflächen des Gebäudes sind besser zur Sonne orientiert und sind idealerweise mit Fotovoltaikanlagen ausgestattet und produzieren Strom. Die Gebäudeflächen werden so optimal zur Absenkung des Primärenergiebedarfs genutzt.

Des Weiteren ist in dem Vorschlag vorteilhafter Weise vorgesehen, dass die Gebäudeaußenwand auf der Außenseite eine, das Rohrleitungsregister verdeckende Außentrennlage trägt. Die Außentrennlage hat dabei nicht nur optische, also gestalterische Aspekte, sondern auch unterschiedliche technische Eigenschaften. Dabei ist die Außentrennlage sehr variabel gestaltbar, zum Beispiel als Konstruktionsplatte, Netz oder Folie.

Bei einer bevorzugten Ausgestaltung des Vorschlags ist vorgesehen, dass zwischen dem Rohr-Ieitungsregister und der Gebäudeaußenwand eine Wärmeisolationsschicht vorgesehen ist. Eine solche Ausgestaltung ist insbesondere dann günstig, wenn mit dem Fassadensystem solare Wärmeenergie eingesammelt wird.

Des Weiteren ist vorgesehen, dass zwischen dem Rohrleitungsregister und der Außentrennlage eine Wärmeisolationsschicht vorgesehen ist. Diese Variante ist von Vorteil, wenn mit dem Fassadensystem eine Temperierung der Außenseite der Gebäudeaußenwand durchgeführt wird. Idealerweise befindet sich dabei zwischen der Wärmeisolationsschicht und der Außenseite der Gebäudeaußenwand ein Luftspalt, in dem das Rohrleitungsregister angeordnet ist und welcher von dem in dem Rohrleitungsregister fließenden Medium temperiert wird. Es reicht dabei eine dünne Wärmeisolationsschicht aus, um insbesondere eine Konvektion mit der Umgebung zu vermeiden.

In einer vorteilhaften Ausgestaltung ist vorgesehen, dass zwischen dem Rohrleitungsregister und der Gebäudeaußenwand eine IR- bzw. Wärmestrahlung reflektierende Schicht vorgesehen ist.

Geschickter Weise ist vorgesehen, dass zwischen dem Rohrleitungsregister und der Gebäudeaußenwand eine Wärmestrahlung absorbierende Schicht vorgesehen ist. Eine solche Ausgestaltung ist insbesondere dann günstig, wenn mit dem Fassadensystem solare Wärmeenergie eingesammelt wird. Die Wärmestrahlung absorbierende Schicht wird durch die Sonneneinstrahlung erwärmt. Das Rohrleitungsregister liegt auf der der Gebäudeaußenwand abgewandten Seite dieser Schicht, und somit ebenfalls der Sonne zugewandt. Es besteht ein guter Kontakt zwischen dem Rohrleitungsregister und der absorbieren Schicht um die solare Wärmeenergie einzusammeln und abzuführen.

Alternativ ist es aber auch möglich, dass die Außentrennlage aus einem Wärmestrahlung absorbierende Material ausgebildet ist. Von außen nach innen gesehen befindet sich dann das Rohrleitungsregister hinter der Außentrennlage, ist also von dieser verdeckt. Die Vorderseite Außentrennlage wird durch die Sonne erwärmt und das Rohrleitungsregister, das thermisch gut an die Außentrennlage angekoppelt ist, sammelt die Wärmeenergie ein und leitet diese durch das in dem Rohrleitungsregister fließenden Medium ab.

In einer weiteren bevorzugten Ausführungsform ist vorgesehen, dass das Fassadensystem ein zweites Rohrleitungsregister aufweist und der Abstand des ersten Rohrleitungsregisters von der innenliegenden Oberfläche der Wand kleiner ist wie der Abstand der zweiten Rohrleitungsregis- ter von der innenliegenden Oberfläche der Wand. Als innenliegende Oberfläche der Wand wird dabei zum Beispiel die Raumwand gesehen. Dieser Vorschlag kombiniert die beiden vorteilhaften Wirkungen der Erfindung. Dabei ist vorgesehen, dass das erste, innenliegende Rohrlei- tungsregister zur Temperierung des Fassadensystems dient, wohingegen das zweite, außenliegende, unter der Außentrennlage befindliche Rohrleitungsregister für das Sammeln der solarthermischen Energie vorgesehen ist. Die beiden Rohrleitungsregister sind somit für die verschiedenen Einsatzbereiche optimiert ausgebildet. Diese auch als Zweischichtsystem beschriebene Anordnung wird dabei bevorzugt auf unterschiedlichen Betriebstemperaturen betrieben. In dem zweiten Rohrleitungsregister, das für das Sammeln der solarthermischen Energie vorgesehen ist, wird vorzugsweise ein hohes Temperaturniveau angestrebt, die so eingesammelte Energie wird in einen Wärmespeicher eingespeichert. Für den Betrieb des ersten, innenliegenden Rohrleitungsregisters reicht ein deutlich geringeres Temperaturniveau aus. Günstiger Weise dient das von außen auf das erste Rohrleitungsregister aufgesetzte zweite Rohrleitungsregister als zusätzliche Wärmedämmung beim Betrieb des ersten Rohrleitungsregisters.

In einer bevorzugten Ausgestaltung ist vorgesehen, dass eine Steuerung vorgesehen ist, die zwischen einem Betrieb des Fassadensystems für eine Temperierung / Erwärmung der Außenseite der Gebäudeaußenwand und dem Sammeln von solarer Wärmeenergie umschaltet.

In dieser Ausgestaltung der Erfindung werden weitere, erhebliche Vorteile des Vorschlages deutlich. Primär ist die Erfindung auf eine Reduktion des Wärmeverlustes ausgerichtet. Überraschenderweise ist der erfindungsgemäße Vorschlag aber auch mehrfach nutzbar, nämlich er eignet sich auch zum Sammeln von solarthermische Energie. In diesem Anwendungsfall ist vorzugsweise die Außentrennlage, und gegebenenfalls auch eine zwischen der Außentrennlage und dem Rohrleitungsregister angeordnete Isolationsschicht, zumindest im Infrarot (IR)-Spektralbereich zumindest teiltransparent ist. Als Außenanlage kann in diesem Ausführungsbeispiel zum Beispiel eine Isolierglasscheibenanordnung vorgesehen sein.

In einem ersten Ausführungsbeispiel ist vorgesehen, dass nur ein Rohrleitungsregister vorgesehen ist. Die vorgeschlagene Steuerung wirkt dabei mindestens auf ein Umschaltventil (zum Beispiel ein Mehrwegeventil), dass das Rohrleitungsregister in der ersten Stellung mit der Wärmequelle verbindet. In der zweiten Stellung wird das Rohrleitungsregister mit einem Wärmespeicher verbunden. Natürlich sind im Kreislauf entsprechende Förderpumpen vorgesehen. Vorzugsweise ist je ein Umschaltventil in der Zu- und Ableitung zwischen der Wärmequelle und dem Rohrleitungsregister vorgesehen.

Im zweiten Ausführungsbeispiel ist vorgesehen, dass ein erstes und ein zweites Rohrleitungsregister vorgesehen ist. Optional ist vorgesehen, dass diese beiden Rohrleitungsregister hydraulisch voneinander getrennt sind, ohne aber die Erfindung hierauf zu beschränken. Das erste Rohrleitungsregister hat die Aufgabe die Außenseite der Gebäudeaußenwand zu temperieren bzw. zu erwärmen. Hierzu ist das erste Rohrleitungsregister mit einer Wärmequelle verbunden, in diesem Kreislauf ist auch eine von der Steuerung an steuerbare Förderpumpe vorgesehen. Das zweite Rohrleitungsregister ist mit dem Wärmespeicher (zum Beispiel ein hydraulischer Wärmespeicher oder ein Festkörperwärmespeicher) hydraulisch verbunden. Auch in diesem Kreislauf ist eine von der Steuerung an steuerbare Förderpumpe vorgesehen. In dem hier beschriebenen Anwendungsfall wirkt die Steuerung auf die beiden Förderpumpen und schaltete die eine ab und die andere ein, je nach Betriebsmodus.

Die Steuerung ist zum Beispiel mit einer Uhr ausgestattet und temperiert / erwärmt die Gebäudeaußenseite nur nachts. Dies ist eine verhältnismäßig einfache Anordnung. Die Steuerung kann (gegebenenfalls zusätzlich zu einer Zeitsteuerung) mit mindestens einem Temperatursensor verbunden sein und einen Algorithmus aufweisen, der in Abhängigkeit der von dem mindestens einem Temperatursensor ermittelten Temperaturniveau/s entweder auf einen Temperierungs-Modus oder den Wärmesammelmodus schaltet.

Des Weiteren ist günstiger Weise vorgesehen, dass zwischen dem ersten Rohrleitungsregister und dem zweiten Rohrleitungsregister eine Innentrennlage angeordnet ist. Die Innentrennlage grenzt das erste Rohrleitungsregister vor dem zweiten Rohrleitungsregister ab. Die Innentrenn- lage ist dabei ein flächiges Bauteil. Die Innentrennlage ist vorzugsweise auch reflektierend, absorbierend oder beides in jeweils bestimmten, unterschiedlichen Frequenzen.

Vorteilhafter Weise ist vorgesehen, dass die Innen- bzw. Außentrennlage als Konstruktions- oder Fassadenplatte oder als Spannfolie ausgebildet ist. Auf der Unterseite der Konstruktions- oder Fassadenplatte befinden sich einerseits die Befestigungselemente zum Befestigen dieser Platten auf der Gebäudeaußenwand und andererseits können diese Platten auch das Rohrleitungsregister halten. Günstige Weise wird dabei die Platte relativ dünn ausgeführt, damit diese nicht in der Lage ist, zu viel Wärmeenergie aufzunehmen. Sie soll primär dazu dienen, die Wärmeenergie möglichst effektiv in das wärmeführende Medium, welches in dem Rohrleitungsre-gister fließt, zu übertragen.

Insbesondere der Einsatz einer Folie, Kunststofffolie oder Spannfolie hat Vorteile. Dabei wurde gefunden, dass vorzugsweise aus Polyethylen (PE) gefertigte Folien vorteilhaft sind.

Klassische Fassaden sind durch ihre Masse und der darin gespeicherten Wärmeenergie bzw. durch den Transmissionsverlust an Wärme aus dem Gebäudeinneren vorTauwasser geschützt. Bei wärmegedämmten Fassaden ist dies nicht so. Ihre Masse ist zu gering als das sich durch die Masse eine wärmere Oberfläche bilden könnte. Gleichzeitig ist die mehrere Millimeter starke Putzlage, die aus konstruktiven Gründen auch nicht wesentlich dünner sein kann, zu träge als dass Sie sich in den Morgenstunden schnell genug, mit den steigenden Temperaturen die eigene Temperatur ändern könnte, dass sich eben kein Tauwasser bilden würde. Bisherige, wärmegedämmte Fassaden haben deshalb das Problem, dass sich durch das Tauwasser Algen, Moose und Pilze bilden. Diese werden durch diverse Fungizide oder Herbizide vernichtet, welche in die Putze und Farben eingebracht werden. Diese Wirkstoffe bedeuten in aller Regel einen gewissen Aufwand und belasten zudem Natur und insbesondere das Grundwasser.

Das hier vorgestellte Fassadensystem, bei welcher insbesondere die Außentrennlage als Spannfolie ausgebildet ist, verringert das Problem deutlich. Durch das geringe Gewicht und der damit verbunden geringeren Wärmespeicherung des vorgespannten Materials kann dieses dem morgendlichen Temperaturanstieg schneller folgen als dies bei schwereren Stoffen der Fall ist. In vielen Fällen genügt bereits dies um Tauwasser zu vermeiden.

Vorzugsweise ist die Spannfolie auch als Gewebefolie ausgebildet, besitzt also eine Netzstruktur, die eine Armierung bzw. höhere mechanische Stabilität bietet. Diese Netzstruktur ist zumindest teilweise vorteilhafter Weise mit Kupfer- oder Silberfäden ausgestattet.

So wird vorgeschlagen, dass die Spannfolie, bzw. das Foliengewebe mit speziellen Materialien, z.B. Silber- oder Kupferfäden versehen werden, deren Ionen, die sich im Falle der Betauung lösen, das Wachstum von Algen, Moos oder Pilzen zumindest so stark hemmen, dass das Wachstum in Verbindung mit einer raschen Trocknung, deren Effekt durch eine ebenfalls vorgeschlagene Materialauswahl oder/und Imprägnierung des Gewebes, z.B. mit natürlichen Firnissen oder ähnlichem, verhindert wird.

Des Weiteren ist in dem Vorschlag vorteilhafter Weise vorgesehen, dass die Innen- und/oder Außentrennlage an oder mit dem Rohrleitungsregister befestigt ist.

Bei einer bevorzugten Ausgestaltung des Vorschlags ist vorgesehen, dass die Innen- und/oder Außentrennlage akustisch dämpfend ausgebildet ist. Gemäß der Erfindung ist vorgesehen, dass insbesondere die Außentrennlage akustisch wirksam, insbesondere akustisch dämpfend ausgebildet ist. Eine solche Eigenschaft kann günstiger Weise mit einer aus Kunststoff gefertigten Spannfolie erreicht werden, und vereint eine Mehrzahl von Vorteilen. Eine akustisch dämpfende Außentrennlage in dem vorgeschlagenen Fassadensystem reduziert die Lärmbelästigung, da der Schall, zum Beispiel der Verkehrslärm, an der so verkleideten Fassade nicht mehr reflektiert wird. Durch den Einsatz der Folie wird der Schimmel- oder Pilzbefall der sichtbaren Fläche einer Fassade deutlich reduziert.

Dabei gibt es verschiedene Möglichkeiten, die Reflexion von Lärm an Fassadenflächen zu reduzieren.

Im ersten Fall (Effekt 1) wird die Folie oder das Gewebe vom Schall angeregt und wirft zeitversetzt (in Millisekunden) die Schallwelle zurück. Durch die zeitliche Verzögerung kommt es zu einer Phasenverschiebung. Dabei kommt es zu akustischen Auslöschungseffekten. Werden an der Wand bzw. in dem Fassadensystem verschiedene parallele Luftkammern hintereinander kombiniert, es ist notwendig die Kammern mit Membranen auszustatten. Diese regulieren den aktuellen Schalldruck in den einzelnen Kammern. Somit kann jede Kammer nach Bedarf gesteuert werden.

In einem anderen Ausführungsbeispiel ist vorgesehen, dass sich die Strömungswiderstände der Bespannung zur Tragstruktur hin verringern (höchster Strömungswiderstand der Bespannung auf der sichtbaren Fassade - Sichtseite in mehreren Schichten, in Richtung Tragstruktur nimmt der Strömungswiderstand der Bespannung ab). Zwischen jeder Stoffschicht erfolgt ein Impe- danz-Sprung, bei der Energie vernichtet wird. Kombiniert man diese Lösung noch mit einem Absorber / Dämmschicht auf der Tragstruktur des Gebäudes (zum Beispiel der Gebäudeaußen-wand) können über diesen Weg alle gewünschten Absorptionswerte eingestellt werden.

Bei der letzten hier vorgestellten Variante werden von vorne nach hinten, in unterschiedlichen Lagen, mehrere Kammerfolien hintereinander angeordnet. Die einzelnen Kammerfolien haben dünne Schlitze, die in die nächste Folienlage führen. Sind die Schlitze versetzt angeordnet, ist davon auszugehen, dass der Effekt 1 mit dem Effekt Beugung am Schlitz zu einer positiven Kombination führen wird. Zusätzlich sollten die Schlitze oder (Öffnungen) so gestaltet werden, dass diese wie eine "Fischreuse" funktionieren. Der Schalldruck öffnet den Schlitz und der Schall wandert ein. Bei abnehmendem Schalldruck (Sinuswelle) schließt sich der Schlitz (Membran) und verhindert das ungehinderte Reflektieren (Austreten) des Schalls.

Die vorgenannten 3 Varianten werden bei Fassadenbespannungen zu akustischen Bedämpfun-gen führen. Hierbei ist zu beachten, dass sich dieser Effekt auch unabhängig von der erfindungsgemäßen Ausgestaltung des Fassadensystems einstellen wird, also auch bei einer alternativen Fassadenanordnung, bestehend aus einer Gebäudeaußenwand mit einer Außenseite und einer Innenseite, wobei auf der Außenseite eine Fassadenbespannung, wie beschrieben, vorgesehen ist. Die Fassadenanordnung besteht aus einer Gebäudeaußenwand mit einer Au ßenseite und einer Innenseite, wobei die Außenseite eine Fassadenbespannung aufweist. Auf der Außenseite der Gebäudeaußenwand der Fassadenanordnung ist dabei eine Tragstruktur für die Fassadenbespannung vorgesehen. Die Tragstruktur besteht aus mindestens zwei Haltern, die auf der Gebäudeaußenwand befestigt sind an welchen die Fassadenbespannung befestigt bar ist. Die Fassadenbespannung ist zum Beispiel eine Folie oder ein Gewebe. Sie besitzt eine gewisse Elastizität. In einer bevorzugten Ausgestaltung ist vorgesehen, dass die Fassadenbespannung (rechtwinklig zu ihrer Fläche) mehrere, hintereinander angeordnete Luftkammern aufweist. Die Luftkammern sind insbesondere mit Membranen ausgestattet. Alternativ sind mehrere Folien bzw. Kammerfolien mit Abstand zueinander hintereinander angeordnet. Der Strömungswider-stand dieser Folien bzw. Kammerfolien verringert sich hin zur Tagstruktur/Gebäudeaußenwand. Die Folien bzw. feste Kammerfolien besitzen dünne Schlitze, die insbesondere zwischen den einzelnen Folienlagen versetzt zueinander angeordnet sind. Auf die Anwesenheit des Rohrleitungsregisters kommt es dabei nicht zwingend an, der Vorteil einer solchen Ausgestaltung liegt in einer erheblichen Lärmentlastung der Umwelt. Der Anmelder behält es sich insofern vor, diesen Gegenstand zum Gegenstand einer Teilanmeldung zu machen.

Die Erfindung umfasst auch eine Kombination des vorgeschlagenen Fassadensystems mit den verschiedenen Varianten einer akustischen Bedämpfung wie beschrieben. Zu dieser akustischen Dämpfung wirkt nicht nur die Außentrennlage mit, auch die Innentrennlage ist hierbei einsetzbar.

Soweit in dieser Anmeldung von einer Innen- bzw. Außentrennlage gesprochen wird, so ist hier jeweils die Innentrennlage oder die Außentrennlage, jeweils einzeln angesprochen.

Des Weiteren ist vorgesehen, dass die Innen- bzw. Außentrennlage aus einem Wärmestrahlung absorbierende Material ausgebildet ist. Eine solche Ausgestaltung ist gerade für die Wärme sammelnde Betriebsweise des Fassadensystems von Vorteil.

In einer vorteilhaften Ausgestaltung ist vorgesehen, dass die Außentrennlage im Infrarot (IR)-Spektralbereich zumindest teiltransparent ist. "Teiltransparent" bedeutet hierbei zum einen, dass die Außentrennlage nicht über das gesamte infrarote Spektrum gleich durchlässig ist und zum anderen, dass bei einer gewissen infraroten Wellenlänge zumindest ein Teil dieser Strahlung durch die Außentrennlage hindurchtritt.

Da das Rohrleitungsregister unterhalb der Außentrennlage angeordnet ist, ist es günstig, die Wärmestrahlung in das Fassadensystem eindringen zu lassen und so eine möglichst optimale Aufwärmung des außenliegenden Rohrleitungsregisters zu erreichen. Zum Beispiel ist eine aus Polyethylen bestehende Kunststofffolie als Außentrennlage im Infrarot (IR)-Spektralbereich zumindest teiltransparent. Die Außentrennlage ist aber auch zum Beispiel eine Glasscheibe. Die Glasscheibe ist für das sichtbare Licht und die kurzwellige, infrarote Strahlung transparent, allerdings für die ferne infrarote Strahlung reflektierend. Es bildet sich so unter der Außentrenn- lage ein Treibhauseffekt aus, der gerade für das Einsammeln von Wärmeenergie von Vorteil ist.

Geschickter Weise ist vorgesehen, dass die Innentrennlage eine wärmedämmende Isolationsschicht aufweist. Eine solche Ausgestaltung hat einen doppelten Nutzen. Zum einen wird erreicht, dass die durch die Sonnenstrahlung eingeschlossene Wärmeenergie nicht in Richtung der Gebäudeaußenwand abfließt und somit nicht eingesammelt werden kann und zum anderen hilft diese Isolationsschicht bei der Temperierung der Gebäudeaußenwand durch das innenliegende Rohrleitungsregister, wie oben beschrieben.

In einer weiteren bevorzugten Ausführungsform ist vorgesehen, dass die Innentrennlage eine IR- bzw. Wärmestrahlung reflektierende Oberfläche aufweist. Eine solche Ausstattung erreicht, dass die eingefangene Wärmestrahlung im Bereich des außenliegenden Rohrleitungsregisters verbleibt und dort die Wärmeenergie eingesammelt werden kann.

Des Weiteren ist günstiger Weise vorgesehen, dass die Gebäudeaußenwand als Ziegel-, Beton-, oder Spannbetonmauer oder als Holz-, Holzständer-Wand ausgebildet ist. Der Einsatz des erfindungsgemäßen Fassadensystems die statische Ausgestaltung der Gebäudeaußenwand nicht festgelegt.

Vorteilhafter Weise ist vorgesehen, dass die Außentrennlage einen Putz trägt und somit ein übliches Erscheinungsbild ergibt.

Des Weiteren ist in dem Vorschlag vorteilhafter Weise vorgesehen, dass das Rohrleitungsregis-ter einen Befestigungsabschnitt und einen Rohrleitungsabschnitt aufweist. Der Befestigungsab-schnitt dient dazu, das Rohrleitungsregister an der Konstruktion, zum Beispiel an der Gebäu-deaußenwand zu befestigen oder stellt selber ein Element dar, an den ein weiterer Gegenstand, zum Beispiel die Außentrennlage, befestigt werden kann.

In einem ersten Ausführungsbeispiel ist dabei vorgesehen, dass Befestigungsabschnitt und Rohrleitungsabschnitt einstückig ausgebildet sind. Zum Beispiel ist das Rohrleitungsregister als extrudiertes Aluminiumprofil ausgebildet, wodurch der Befestigungsabschnitt und der Rohrleitungsabschnitt einstückig miteinander ausgeführt sind.

In einem anderen Ausführungsbeispiel hierzu ist dabei vorgesehen, dass das Rohrleitungsregister zweiteilig ausgebildet ist und der Befestigungsabschnitt auch zur Aufnahme des schlauchartigen Rohrleitungsabschnittes ausgebildet ist. In diesem Fall ist der Befestigungsabschnitt zum Beispiel als Rollprofil ausgebildet, und besteht aus dünnwandigen Blech. In diesen Befestigungsabschnitt ist dann auch eine Aufnahme für den Rohrleitungsabschnitt eingearbeitet bzw. vorgesehen. Der Rohrleitungsabschnitt ist als separates Bauelement schlauchartig ausgebildet und wird nach der Montage des Befestigungsabschnittes in der Aufnahme montiert.

Das Weiteren umfasst die Erfindung auch die Verwendung eines Rohrleitungsregisters auf der Außenseite einer Gebäudeaußenwand für das Sammeln von solarer Wärmeenergie und/oder zum Temperieren der Außenseite der Gebäudeaußenwand.

Außerdem umfasst die Erfindung ein Verfahren zur Reduktion des Wärmeverlustes eines Raumes oder Gebäudes, wobei der Raum bzw. das Gebäude von einer Gebäudeaußenwand begrenzt wird und auf der Außenseite der Gebäudeaußenwand ein Rohrleitungsregister vorgesehen ist, durch welches ein hydraulisches, wärmetransportierendes Medium mit einer Mediumtemperatur geleitet wird und die Mediumtemperatur höher ist wie die außenseitige Umgebungstemperatur und somit die Außenseite der Gebäudeaußenwand erwärmt / temperiert wird.

Der Pfiff des erfindungsgemäßen Verfahrens liegt darin, dass durch die vorgeschlagene Verfahrensweise der Wärmeverlust durch Wärmeleitung durch die Gebäudeaußenwand reduziert wird und daher dieser erfindungsgemäße Vorschlag in überraschender Weise zur Reduktion des Wärmeverlustes, wie oben beschrieben, eines Raumes oder Gebäudes beiträgt. Geschickter Weise ist dabei die Mediumtemperatur höher wie die Außentemperatur bzw. die außenseitige Umgebungstemperatur. Dadurch wird die Wandaußenseite gegenüber der Umgebung erwärmt und die Temperaturdiffernz zwischen Innen und "Außen" (das ist hier die Außenseite der Gebäudeaußenwand) reduziert.

Außerdem umfasst die Erfindung die Verwendung einer Kunststofffolie, insbesondere einer gespannten Kunststofffolie als Außentrennlage in einem Fassadensystem, wie beschrieben.

In diesem Zusammenhang wird insbesondere darauf hingewiesen, dass alle in Bezug auf das Fassadensysten beschriebenen Merkmale und Eigenschaften aber auch Verfahrensweisen sinngemäß auch bezüglich der Formulierung der erfindungsgemäßen Verwendung und Verfahren übertragbar und im Sinne der Erfindung einsetzbar und als mitoffenbart gelten.

Gleiches gilt auch in umgekehrter Richtung, das bedeutet, nur in Bezug auf die Verwendung oder dem Verfahren genannte, bauliche also vorrichtungsgemäße Merkmale können auch im Rahmen der Vorrichtungsansprüche für das Fassadensysten berücksichtigt und beansprucht werden und zählen ebenfalls zurOffenbarung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

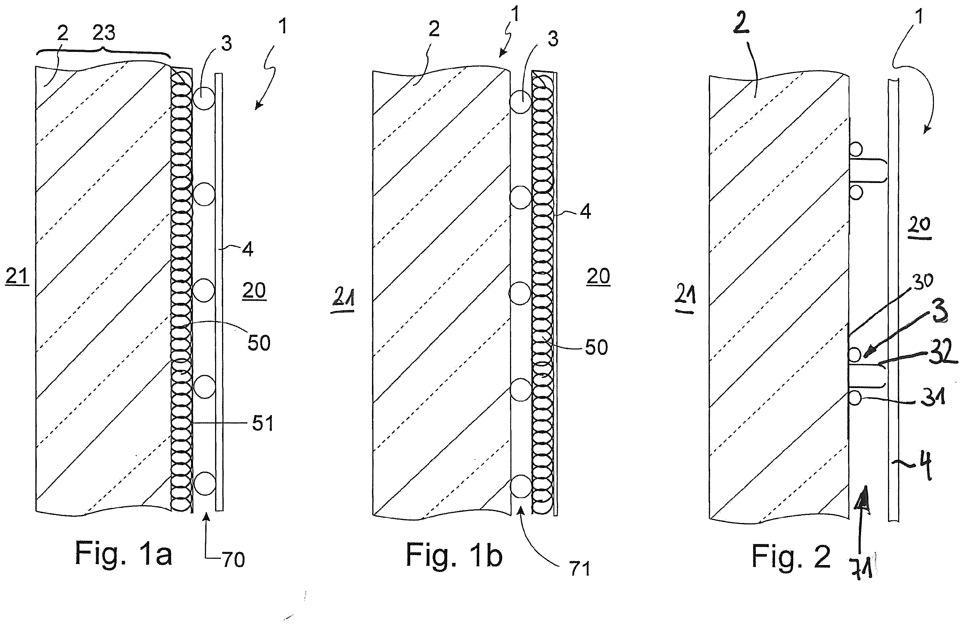

- Fig. 1a, 1b, 2, 3, 4: jeweils in einem vertikalen Schnitt verschiedene Ausführungsbeispiele des erfindungsgemäßen Fassadensystems

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderungsinngemäß auf die neue Lage zu übertragen. Weiterhin können auch Einzelmerkmale oder Merk-malskombinationen aus den gezeigten und beschriebenen unterschiedlichen Ausführungsbei-spielen für sich eigenständige, erfinderische oder erfindungsgemäße Lösungen darstellen.

In Figur 1a ist ein 1. Ausführungsbeispiel des erfindungsgemäßen Fassadensystems 1 gezeigt. Die Gebäudeaußenwand 2 grenzt eine Innenseite 21 (zum Beispiel eines hier nicht weiter dargestellten Raumes) von einer Außenseite 20 ab. Die statisch wirksame Wandstärke der Gebäu-deaußenwand 2 ist mit 23 gekennzeichnet.

Auf der Außenseite 20 ist auf der Gebäudeaußenwand 2 zunächst eine Wärmeisolationsschicht 50 angeordnet. Auf der der Gebäudeaußenwand 2 abgewandten Seiteder Wärmeisolations-schicht 50 ist eine Wärmestrahlung reflektierende Schicht 51 angeordnet. Dies kann zum Beispiel eine mit Aluminium beschichtete Kunststofffolie oder ähnliches sein.

Auf der der Wärmeisolationsschicht 50 abgewandten Seite der Schicht 51 schließlich dann einem (ersten) Rohrleitungsregister 3 an. Indiesem Ausführungsbeispiel ist das Rohrleitungsre-gister 3 als Schlauchleitung ausgebildet, die mäanderförmig angeordnete ist.

Nach außen hin ist das Rohrleitungsregister 3 von einer Außentrennlage 4 abgedeckt. Die Anordnung ist dabei so gewählt, dass sich zwischen der Außentrennlage 4 und der Wärmestrahlung reflektierende Schicht 51 ein Luftpolster 70 oder Luftspalt ergibt. Sowohl das Rohrleitungsregister 3, wie auch die Außentrennlage 4, sind mit nicht weiter gezeigten, hinlänglich bekannten Befestigungselementen an der Gebäudeaußenwand 2 befestigt. Beispielsweise ist die Au-ßentrennlage 4 als verhältnismäßig dünne Konstruktions- oder Fassadenplatteausgebildet.

Scheint nun die Sonne auf die Außentrennlage 4, so erwärmt sich diese und auch das dahinter befindliche Luftpolster 70. In dem Rohrleitungsregister 3 fließt eine Wärme aufnehmendes Medium, zum Beispiel Wasser. Das Rohrleitungsregister 3 wird einerseits durch den unmittelbaren Kontakt mit der sich erwärmenden Außentrennlage 4 und andererseits durch das sich erwerbende Luftpolster 70 ebenfalls erwärmt und überträgt diese Wärme auf das Medium, welches die Wärme in einen Wärmespeicher transportiert.

Die Wärmeisolationsschicht 50 verhindert, dass die eingestrahlte Wärme in Richtung der Gebäudeaußenwand 2 abfließt. Für den Fall, dass die die Außentrennlage 4 im Infrarot (IR)-Spek-tralbereich zumindest teiltransparent ist, wirkt diese günstig mit der IR- bzw. Wärmestrahlung reflektierende Schicht 51 zusammen, wenn nämlich die Außentrennlage 4 dann diese reflektierte Strahlung nicht mehr austreten lässt. Ziel ist es, die eingestrahlte Wärmeenergie möglichst vollständig, mindestens aber größtenteils mit dem in dem Rohrleitungsregister fließenden Medium einzusammeln.

Ein ähnlich guter Effekt kann auch dadurch erreicht werden, dass ein möglichst guter wärmeführender Kontakt zwischen dem Rohrleitungsregister 3 und der Außentrennlage 4 besteht. Figur 1a zeigt daher den Anwendungsfall, dass mit dem erfindungsgemäßen Fassadensystem 1 Wärmeenergie eingesammelt wird. Figur 1b zeigt den anderen Anwendungsfall, bei welchen mit dem erfindungsgemäßen Fassadensystem die Außenseite der Gebäudeaußenwand 2 temperiert wird.

In dem in Figur 1b gezeigten Ausführungsbeispiel ist das Rohrleitungsregister 3 direkt auf der Außenseite der Gebäudeaußenwand 2 angeordnet. Das Rohrleitungsregister 3 istähnlich wie in Figur 1a schlauchartig ausgebildet. Auf der der Gebäudeaußenwand 2 abgewandten Seite des Rohrleitungsregisters 3 schließt sich dann die Wärmeisolation 50 an. Zwischen der Wärmeisolation 50 und der Gebäudeaußenwand 2 ergibt sich so ein isolierter oder gedämmter Zwischenraum 71. Im Temperierungsfall wird das Rohrleitungsregister 3 zum Beispiel mit 8-10°C warmen Grundwasser betrieben. Dadurch erwärmt sich der Zwischenraum 71 (vorausgesetzt, die Umgebungstemperatur der Außenseite 20 ist entsprechend niedriger). Der Wärmefluss durch die Gebäudeaußenwand 2 reduziert sich, da eine deutlich geringere Temperaturdifferenz besteht.

Auf der Außenseite der Wärmeisolation 50, dem Zwischenraum 71 abgewandt, istdie Wärmeisolation 50 wiederum von einer Außentrennlage 4 verblendet oder abgedeckt. Es kann sich hierbei zum Beispiel um eine Folie (aufgeklebt oder gespannt) oder auch um eine entsprechend befestigte Konstruktionsplatte handeln.

Figur 2 zeigt den gleichen Anwendungsfall die Figur 1b. Auch hier dient das gezeigte Fassadensystem 1 zur Temperierung der Außenseite der Gebäudeaußenwand 2. Hier besitzt das Rohrleitungsregister 3 einen Befestigungsabschnitt 30 und einen Rohrleitungsabschnitt 31. Mithilfe des Befestigungsabschnittes 30 wird das Rohrleitungsregister 3 auf eine Unterkonstruktion, hier zum Beispiel der Außenseite der Gebäudeaußenwand 2 befestigt. Das hier gezeigte Rohrleitungsregister 3 ist profilartig ausgebildet und besitzt zwei parallel verlaufende Stränge, die den Rohrleitungsabschnitt 31 bilden. Zwischen diesen beiden Strängen erhebt sich ein Hal-tebereich 32, der zum Beispiel dafür vorgesehen ist, die Außentrennlage 4 zu halten. Die Außentrennlage 4 ist in diesem Beispiel etwas stärker ausgebildet und integriert in sich auch eine wärmeisolierende Schicht. Vorzugsweise ist das hier gezeigte Rohrleitungsregister 3 als Strang Pressprofil in Aluminium ausgeführt und vereinigt einstückig den Besetzungsabschnitt 30 und den Rohrleitungsabschnitt 31. In dem hier gezeigten Ausführungsbeispiel ist auch der Haltebereich 32 hieran einstückig angeformt.

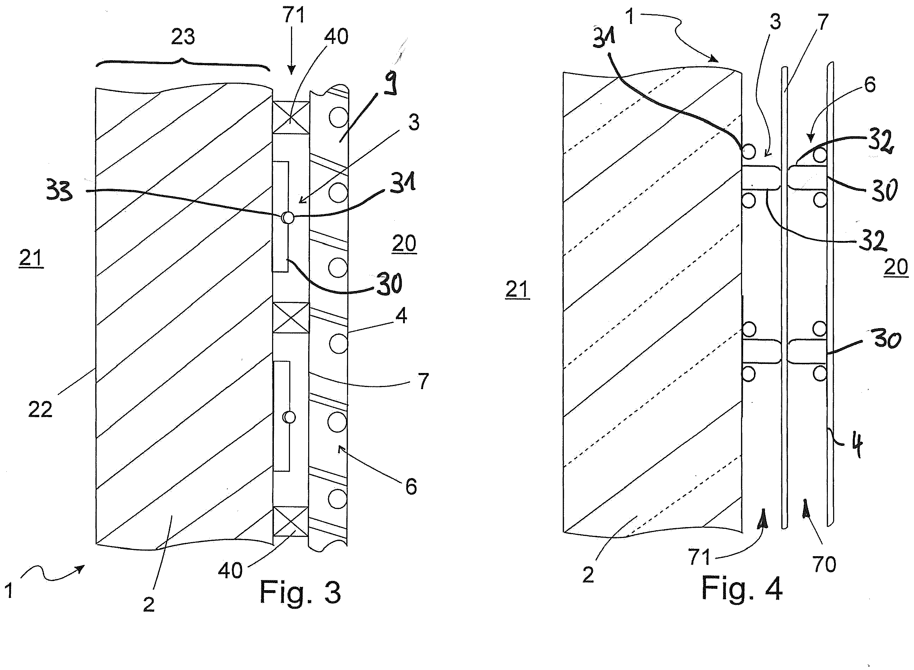

Das Ausführungsbeispiel nach Figur 3 und 4 kombinieren in geschickter Weise die beiden Verwendungsmöglichkeiten des erfindungsgemäßen Fassadensystems 1.

Die Außenseite der Gebäudeaußenwand 2 trägt in Figur 3 einerseits direkt das (erste) Rohrlei-tungsregister 3. Andererseits sind auf der Außenseite der Gebäudeaußenwand 2 Abstandhalter 40 vorgesehen. Auf den Abstandhaltern 40 ist eine weitere Platte 9 montiert. Die Dicke der Abstandhaltern 40 ist größer wie die Höhe des Rohrleitungsregisters 3. Es bildet sich daher zwischen der Platte 9 und der Gebäudeaußenwand 2 ein Zwischenraum 71 aus. Das Rohrleitungsregister 3 dient wiederum im dem abgeschirmten Zwischenraum 71 einer Temperierung der Gebäudeaußenwand 2.

Die hier gezeigte Platte 9 vereinigt eine Mehrzahl unterschiedlicher Funktionen. Zunächst trägt diese ein zweites Rohrleitungsregister 6. Dieses Rohrleitungsregister 6 ist in der Platte 9 auf der dem Zwischenraum 71 abgewandten Seite angeordnet und daher im Anwendungsfall der Sonnenwärme näher positioniert. Die sichtbare Außenseite der Platte 9 bildet auch gleichzeitig die Außentrennlage 4. Die gegenüberliegende Innenseite der Platte 9 bildet die Innentrennlage 7, die den wärmesammelnden Bereich des zweiten Rohrleitungsregisters 6 von der Fassadentemperierung des ersten Rohrleitungsregisters 3 trennt.

Figur 3 zeigt für die Realisierung der Rohrleitungsregister 3,6 zwei weitere Vorschläge:
Das innenliegende, erste Rohrleitungsregister 3 ist zweiteilig ausgebildet. Der Befestigungsabschnitt 30 besitzt auch eine Aufnahme 33 zur Montage des schlauchartigen Rohrleitungsabschnittes 31.

Das außenliegende, zweite Rohrleitungsregister 6 ist in der Platte 9 integriert ausgeführt, zum Beispiel eingegossen oder eingespritzt.

Figur 4 zeigt eine weitere Variante des Zweischichtsystems (wie auch Figur 3). Auf der Außenseite der Gebäudeaußenwand 2 ist das innenliegende, erste Rohrleitungsregister 3 angeordnet.

Der Rohrleitungsabschnitt 31 ist dabei zur Wand orientiert. Die Höhe des Haltebereichs 32 definiert den Zwischenraum 71. Auf dem Haltebereich 32 ist in geeigneter Weise die Innentrenn-lage 7 befestigt. Bei dieser kann es sich zum Beispiel um eine Folie oder gespannte Folie aus Kunststoff handeln. Die Innentrennlage 7 wird dabei mit geeigneten Befestigungsmitteln auf dem Haltebereich 32 befestigt oder mithilfe des außenliegenden, zweiten Rohrleitungsregisters 6, welches wie gezeigt, bezüglich der durch die Innentrennlage 7 definierten Ebene gespiegelt angeordnet ist.

An dem Befestigungsabschnitt 30 des zweiten Rohrleitungsregisters 6 ist die Außentrennlage 4 angeordnet. Auch hier ist zum Beispiel eine gespannte Folie aus Kunststoff vorgesehen. Insbesondere die Außentrennlage 4, gegebenenfalls aber auch die Innentrennlage 7 wirken akustisch dämpfend und sind entsprechend ausgestattet.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Fassadensystem, bestehend aus einer Gebäudeaußenwand (2) mit einerAußenseite (20) und einer Innenseite (21) sowie einem Rohrleitungsregister (3), wobei das Rohrleitungsregister (3) dafür vorgesehen ist, ein hydraulisches, wärmetransportierenden Medium aufzunehmen und zu leiten, das Rohrleitungsregister (3) auf oder in der Außenseite (20) der Gebäudeaußenwand (2) angeordnet ist und wobei das Rohrleitungsregister (3) dafür vorgesehen ist, die Außenseite (20) der Gebäudeaußenwand (2) zu temperieren.

2. Fassadensystem nach Anspruch 1, **dadurch gekennzeichnet, dass** eine Wärmequelle vorgesehen ist, die mit einer Zu- und einer Ableitung mit dem Rohrleitungsregister (3) hydraulisch verbunden ist.

3. Fassadensystem nach einem der vorhergehenden Ansprüche, **dadurch gekennzeichnet, dass** als Wärmequelle Grundwasser, Abwärme aus einem industriellen Prozess oder von im Gebäude installierten Anlagen, Geräte oder Maschinen oder solarthermische Wärme vorgesehen ist.

4. Fassadensystem nach einem der vorhergehenden Ansprüche, **dadurch gekennzeichnet, dass** das Fassadensystem (1) desweitern dafür vorgesehen ist, mit dem Rohrleitungsregister (3) solare Wärmeenergie zu sammeln und vorzugsweise in einen Wärmespeicher abzutransportieren.

5. Fassadensystem nach einem der vorhergehenden Ansprüche, **dadurch gekennzeichnet, dass** die Gebäudeaußenwand (2) auf der Außenseite (20) eine, das Rohrleitungsregister (3) verdeckende Außentrennlage (4) trägt.

6. Fassadensystem nach einem der vorhergehenden Ansprüche, **dadurch gekennzeichnet, dass** zwischen dem Rohrleitungsregister (3) und der Gebäudeaußenwand (2) eine Wärmeisolationsschicht (50) vorgesehen ist und / oder zwischen dem Rohrleitungsregister (3) und der Außentrennlage (4) eine Wärmeisolationsschicht (50) vorgesehen ist.

7. Fassadensystem nach einem der vorhergehenden Ansprüche, **dadurch gekennzeichnet, dass** zwischen dem Rohrleitungsregister (3) und der Gebäudeaußenwand (2) eine IR- bzw. Wärmestrahlung reflektierende Schicht (51) vorgesehen ist und / oder zwischen dem Rohrleitungsregister (3) und der Gebäudeaußenwand (2) eine Wärmestrahlung absorbierende Schicht vorgesehen ist.

8. Fassadensystem nach einem der vorhergehenden Ansprüche, **dadurch gekennzeichnet, dass** das Fassadensystem (1) ein zweites Rohrleitungsregister (6) aufweist und der Abstand des ersten Rohrleitungsregisters (3) von der innenliegenden Oberfläche (22) der Wand (2) kleiner ist wie der Abstand der zweiten Rohrleitungsregister (6) von der innenliegenden Oberfläche (22) der Wand (2).

9. Fassadensystem nach einem der vorhergehenden Ansprüche, **dadurch gekennzeichnet, dass** eine Steuerung vorgesehen ist, die zwischen einem Betrieb des Fassadensystems (1) für eine Temperierung / Erwärmung der Außenseite (20) der Gebäudeaußenwand (1) und dem Sammeln von solarer Wärmeenergie umschaltet.

10. Fassadensystem nach einem der vorhergehenden Ansprüche, **dadurch gekennzeichnet, dass** zwischen dem ersten Rohrleitungsregister (3) und dem zweiten Rohrleitungsregister (6) eine Innentrennlage (7) angeordnet ist.

11. Fassadensystem nach einem der vorhergehenden Ansprüche, **dadurch gekennzeichnet, dass** die Innen- bzw. Außentrennlage (7, 4) als Konstruktions- oder Fassadenplatte oder als Spannfolie ausgebildet ist und / oder die Innen- bzw. Außentrennlage (7, 4) an oder mit dem Rohrleitungsregister (3, 6) befestigt ist und / oder die Innen- bzw. Außentrennlage (7, 4) akustisch dämpfend ausgebildet ist und / oder die Innen- bzw. Außentrennlage (7, 4) aus einem Wärmestrahlung absorbierenden Material ausgebildetist.

12. Fassadensystem nach einem der vorhergehenden Ansprüche, **dadurch gekennzeichnet, dass** die Außentrennlage (4) im Infrarot (IR)-Spektralbereich zumindest teiltransparent ist.

13. Fassadensystem nach einem der vorhergehenden Ansprüche, **dadurch gekennzeichnet, dass** die Innentrennlage (7) eine wärmedämmende Isolationsschicht aufweist und / oder die Innentrennlage (7) eine IR- bzw. Wärmestrahlung reflektierende Oberfläche aufweist.

14. Verwendung eines Rohrleitungsregisters auf der Außenseite einer Gebäudeaußenwand zum Temperieren der Außenseite der Gebäudeaußenwand.

15. Verfahren zur Reduktion des Wärmeverlustes eines Raumes oder Gebäudes, wobei der Raum bzw. das Gebäude von einer Gebäudeaußenwand begrenzt wird und auf der Außenseite der Gebäudeaußenwand ein Rohrleitungsregister vorgesehen ist, durch welches ein hydraulisches, wärmetransportierendes Medium mit einer Mediumtemperatur geleitet wird und die Mediumtemperatur höher ist wie die außenseitige Umgebungstemperatur und somit die Außenseite der Gebäudeaußenwand erwärmt / temperiert wird.
